# EUROPEAN PATENT APPLICATION

(11) **EP 3 109 437 A1**
(43) Date of publication of application: **28.12.2016**
(21) Application number: 16175552.5
(22) Date of filing: 21.06.2016
(51) Int. Cl.: F02C 6/08, F02C 7/12, F02C 9/18

(54) **INTERCOOLED COOLING AIR WITH AUXILIARY COMPRESSOR CONTROL**

(30) Priority: 22.06.2015 US 201514745550
(71) Applicant: United Technologies Corporation, Farmington, CT 06032 (US)
(72) Inventor: MERRY, Brian D., Andover, CT Connecticut 06232 (US); SUCIU, Gabriel L., Glastonbury, CT Connecticut 06033 (US); CHANDLER, Jesse M., South Windsor, CT Connecticut 06074 (US); ROBERGE, Gary D., Tolland, CT Connecticut 06084 (US); STAUBACH, Joseph Brent, Colchester, CT Connecticut 06415 (US)
(74) Representative: Iceton, Greg James

(57) **Abstract**

A gas turbine engine comprises a main compressor section (24) having a high pressure compressor with a downstream discharge, and more upstream locations. A turbine section (28) has a high pressure turbine (117). A tap (110) taps air from at least one of the more upstream locations in the compressor section, passing the tapped air through a heat exchanger (112) and then to a cooling compressor (114), which compresses air downstream of the heat exchanger (112), and delivers air into the high pressure turbine (117). The cooling compressor (114) rotates at a speed proportional to a speed of at least one rotor in the turbine section (28). The cooling compressor (114) is allowed to rotate at a speed that is not proportional to a speed of the at least one rotor under certain conditions. An intercooling system for a gas turbine engine is also disclosed.

## Description

### BACKGROUND

This application relates to improvements in providing cooling air from a compressor section to a turbine section in a gas turbine engine.

Gas turbine engines are known and typically include a fan delivering air into a bypass duct as propulsion air. Further, the fan delivers air into a compressor section where it is compressed. The compressed air passes into a combustion section where it is mixed with fuel and ignited. Products of this combustion pass downstream over turbine rotors driving them to rotate.

It is known to provide cooling air from the compressor to the turbine section to lower the operating temperatures in the turbine section and improve overall engine operation. Typically, air from the high compressor discharge has been tapped, passed through a heat exchanger, which may sit in the bypass duct and then delivered into the turbine section. The air from the downstream most end of the compressor section is at elevated temperatures.

### SUMMARY

In a featured embodiment, a gas turbine engine comprises a main compressor section having a high pressure compressor with a downstream discharge, and more upstream locations. A turbine section has a high pressure turbine. A tap taps air from at least one of the more upstream locations in the compressor section, passing the tapped air through a heat exchanger and then to a cooling compressor, which compresses air downstream of the heat exchanger, and delivers air into the high pressure turbine. The cooling compressor rotates at a speed proportional to a speed of at least one rotor in the turbine section. The cooling compressor is allowed to rotate at a speed that is not proportional to a speed of the at least one rotor under certain conditions.

In another embodiment according to the previous embodiment, an input shaft to the cooling compressor is driven at a speed proportional to the at least one turbine rotor. A clutch disconnects the input shaft from a rotor of the cooling compressor should the input shaft experience a decrease in speed.

In another embodiment according to any of the previous embodiments, a one-way ratchet is positioned between the input shaft and the rotor.

In another embodiment according to any of the previous embodiments, a flywheel rotates with the rotor, such that the compressor maintains a rotational speed after the clutch opens and allows the rotor to rotate independently of the input shaft.

In another embodiment according to any of the previous embodiments, a main fan delivers bypass air into a bypass duct and into the main compressor section. The heat exchanger is positioned within the bypass duct to be cooled by bypass air.

In another embodiment according to any of the previous embodiments, the cooling compressor includes a centrifugal compressor impeller.

In another embodiment according to any of the previous embodiments, air temperatures at the downstream most location of the high pressure compressor are greater than or equal to 1350°F.

In another embodiment according to any of the previous embodiments, the turbine section drives a bull gear, which further drives an impeller of the cooling compressor.

In another embodiment according to any of the previous embodiments, the bull gear also drives an accessory gearbox.

In another embodiment according to any of the previous embodiments, a gear ratio multiplier is included such that the impeller rotates at a faster speed than the tower shaft.

In another embodiment according to any of the previous embodiments, the impeller is a centrifugal compressor impeller.

In another embodiment according to any of the previous embodiments, the impeller is a centrifugal compressor impeller.

In another embodiment according to any of the previous embodiments, an auxiliary fan is positioned upstream of the heat exchanger.

In another embodiment according to any of the previous embodiments, the auxiliary fan operates at a variable speed.

In another featured embodiment, an intercooling system for a gas turbine engine comprises a heat exchanger for cooling air drawn from a portion of a main compressor section at a first temperature and pressure for cooling the air to a second temperature cooler than the first temperature. A cooling compressor compresses air communicated from the heat exchanger to a second pressure greater than the first pressure and communicates the compressed air to a portion of a turbine section. The cooling compressor rotates at a speed proportional to a speed of at least one rotor in the turbine section. The cooling compressor is allowed to rotate at a speed that is not proportional to a speed of the at least one rotor under certain conditions.

In another embodiment according to the previous embodiment, an input shaft to the cooling compressor is driven at a speed proportional to the at least one turbine rotor. A clutch disconnects the input shaft from a rotor of the cooling compressor should the input shaft experience a decrease in speed.

In another embodiment according to any of the previous embodiments, a one-way ratchet is positioned between the input shaft and the rotor.

In another embodiment according to any of the previous embodiments, a flywheel rotates with the rotor, such that the compressor maintains a rotational speed after the clutch opens and allows the rotor to rotate independently of the input shaft.

In another embodiment according to any of the previous embodiments, a bull gear drives an impeller of the cooling compressor.

In another featured embodiment, a gas turbine engine comprises a main compressor section having a high pressure compressor with a downstream discharge, and more upstream locations. A low pressure compressor provides some of the more upstream locations. A turbine section has a high pressure turbine. A tap taps air from at least one of the more upstream locations in the compressor section, passes the tapped air through a heat exchanger and then to a cooling compressor. The cooling compressor compresses air downstream of the heat exchanger, and delivers air into the high pressure turbine.

These and other features may be best understood from the following drawings and specification.

### BRIEF DESCRIPTION OF THE DRAWINGS

Figure 1 schematically shows an embodiment of a gas turbine engine.
Figure 2 shows a prior art engine.
Figure 3 shows one example engine.
Figure 4 is a graph illustrating increasing temperatures of a tapped air against the work required.
Figure 5 shows a detail of an example of an engine.
Figure 6 shows a further detail of the example engine of Figure 5.
Figure 7 shows a further feature of the example engine of Figure 5.
Figure 8 shows a graph associated with the example engine of Figure 5.

### DETAILED DESCRIPTION

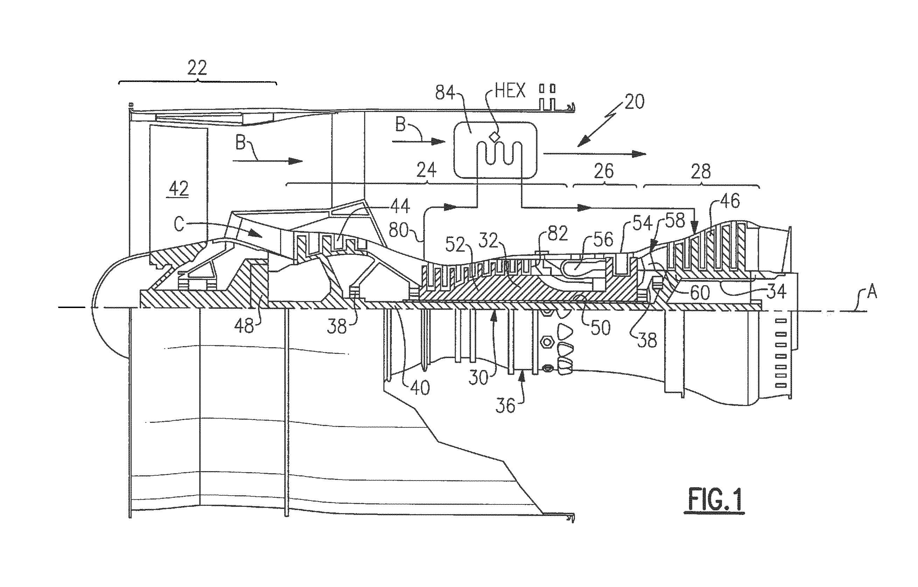

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor assing the tapped air through a heat exc high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6); with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft., with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/(518.7°R)]^{0.5}. The "Low corrected fan tip speed", as disclosed herein according to one non-limiting embodiment, is less than about 1·150 ft/second.

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Gas turbine engines designs are seeking to increase overall efficiency by generating higher overall pressure ratios. By achieving higher overall pressure ratios, increased levels of performance and efficiency may be achieved. However, challenges are raised in that the parts and components associated with a high pressure turbine require additional cooling air as the overall pressure ratio increases.

The example engine 20 utilizes air bleed 80 from an upstream portion of the compressor section 24 for use in cooling portions of the turbine section 28. The air bleed is from a location upstream of the discharge 82 of the compressor section 24. The bleed air passes through a heat exchanger 84 to further cool the cooling air provided to the turbine section 28. The air passing through heat exchanger 84 is cooled by the bypass air B. That is, heat exchanger 84 is positioned in the path of bypass air B.

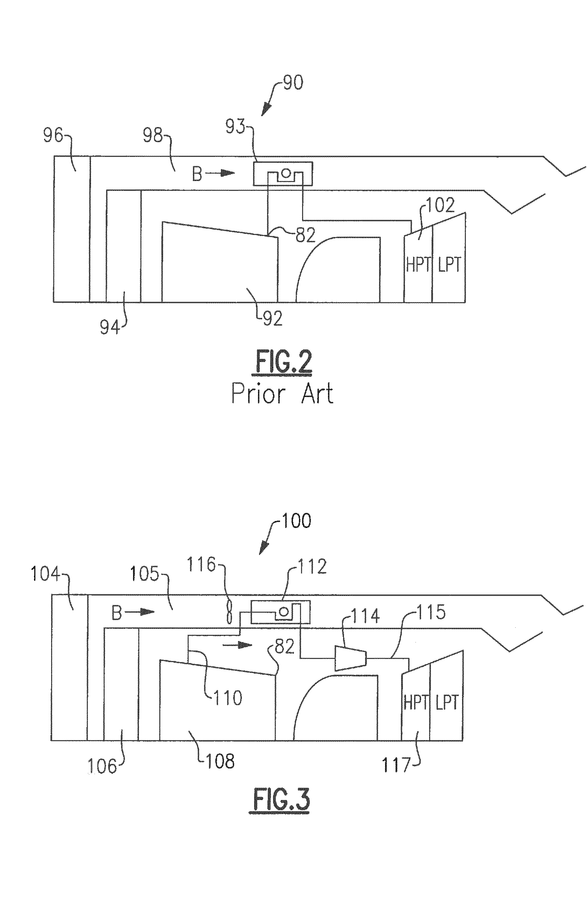

A prior art approach to providing cooling air is illustrated in Figure 2. An engine 90 incorporates a high pressure compressor 92 downstream of the low pressure compressor 94. As known, a fan 96 delivers air into a bypass duct 98 and into the low pressure compressor 94. A downstream most point, or discharge 82 of the high pressure compressor 92 provides bleed air into a heat exchanger 93. The heat exchanger is in the path of the bypass air in bypass duct 98, and is cooled. This high pressure high temperature air from location 82 is delivered into a high pressure turbine 102.

The downstream most point 82 of the high pressure compressor 82 is known as station 3. The temperature T3 and pressure P3 are both very high.

In future engines, T3 levels are expected to approach greater than or equal to 1350°F. Current heat exchanger technology is becoming a limiting factor as they are made of materials, manufacturing, and design capability which have difficulty receiving such high temperature and pressure levels.

Figure 3 shows an engine 100 coming within the scope of this disclosure. A fan 104 may deliver air B into a bypass duct 105 and into a low pressure compressor 106. High pressure compressor 108 is positioned downstream of the low pressure compressor 106. A bleed 110 taps air from a location upstream of the downstream most end 82 of the high pressure compressor 108. This air is at temperatures and pressures which are much lower than T3/P3. The air tapped at 110 passes through a heat exchanger 112 which sits in the bypass duct 105 receiving air B. Further, the air from the heat exchanger 112 passes through a compressor 114, and then into a conduit 115 leading to a high turbine 117. This structure is all shown schematically.

Since the air tapped at point 110 is at much lower pressures and temperatures than the Figure 2 prior art, currently available heat exchanger materials and technology may be utilized. This air is then compressed by compressor 114 to a higher pressure level such that it will be able to flow into the high pressure turbine 117.

An auxiliary fan 116 may be positioned upstream of the heat exchanger 112 as illustrated. The main fan 104 may not provide sufficient pressure to drive sufficient air across the heat exchanger 112. The auxiliary fan will ensure there is adequate air flow in the circumferential location of the heat exchanger 112.

In one embodiment, the auxiliary fan may be variable speed, with the speed of the fan varied to control the temperature of the air downstream of the heat exchanger 112. As an example, the speed of the auxiliary fan may be varied based upon the operating power of the overall engine.

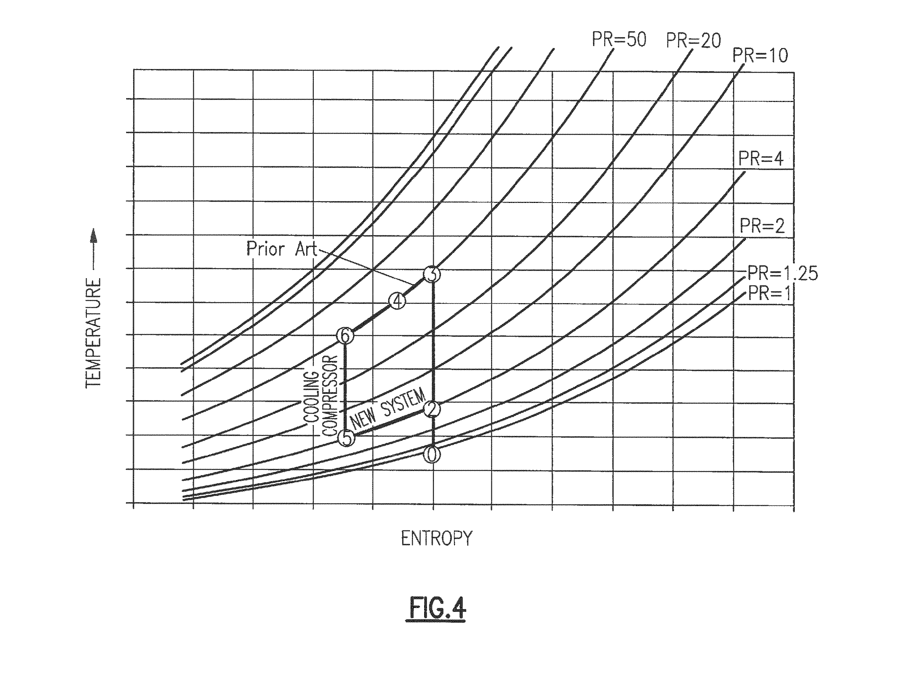

Referring to Figure 4, a temperature/entropy diagram illustrates that a lower level of energy is spent to compress air of a lower temperature to the desired P3 pressure level. Cooler air requires less work to compress when compared to warmer air. Accordingly, the work required to raise the pressure of the air drawn from an early stage of the compressor section is less than if the air were compressed to the desired pressure within the compressor section. Therefore, high pressure air at P3 levels or higher can be obtained at significantly lower temperatures than T3. As shown in Figure 4, to reach a particular pressure ratio, 50 for example, the prior system would move from point 2 to point 3, with a dramatic increase in temperature. However, the disclosed or new system moves from point 2 to point 5 through the heat exchanger, and the cooling compressor then compresses the air up to point 6. As can be appreciated, point 6 is at a much lower temperature.

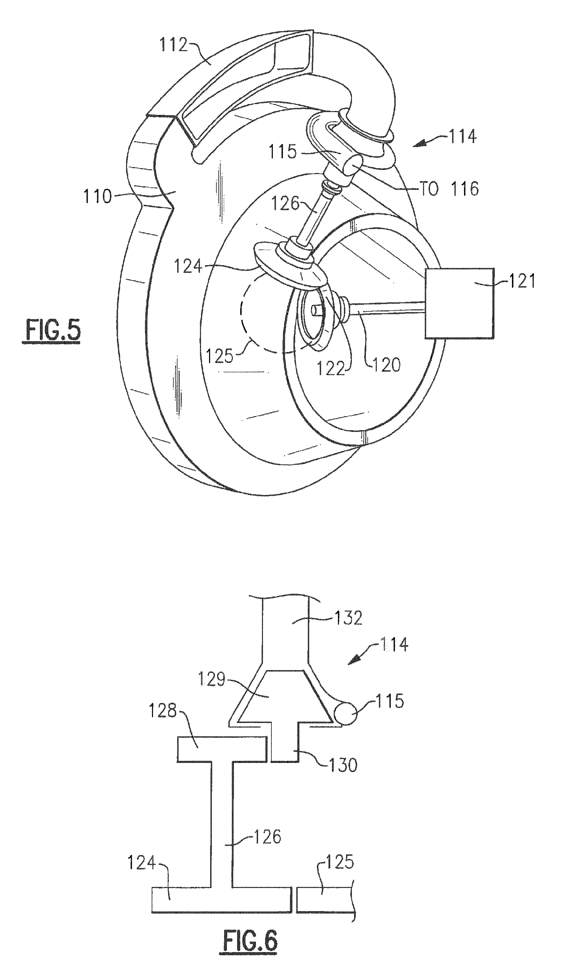

Figure 5 shows a detail of compressor 114 having an outlet into conduit 115. A primary tower shaft 120 drives an accessory gearbox 121. The shaft 126 drives a compressor rotor within the compressor 114. The shafts 120 and 126 may be driven by a bull gear 125 driven by a turbine rotor, and in one example, with a high pressure compressor rotor.

Figure 6 shows an example wherein a gear 128 is driven by the shaft 126 to, in turn, drive a gear 130 which drives a compressor impeller 129. An input 132 to the compressor impeller 129 supplies the air from the tap 110. The air is compressed and delivered into the outlet conduit 115.

By providing a gear ratio multiplier between the compressor impeller 129 and the high spool bull gear 125, the compressor impeller may be driven to operate an optimum speed. As an example, the gear ratio increase may be in a range of 5:1 8:1, and in one embodiment, 6:1.

Details of the engine, as set forth above, may be found in co-pending U.S. Patent Application Serial No. 14/695,578.

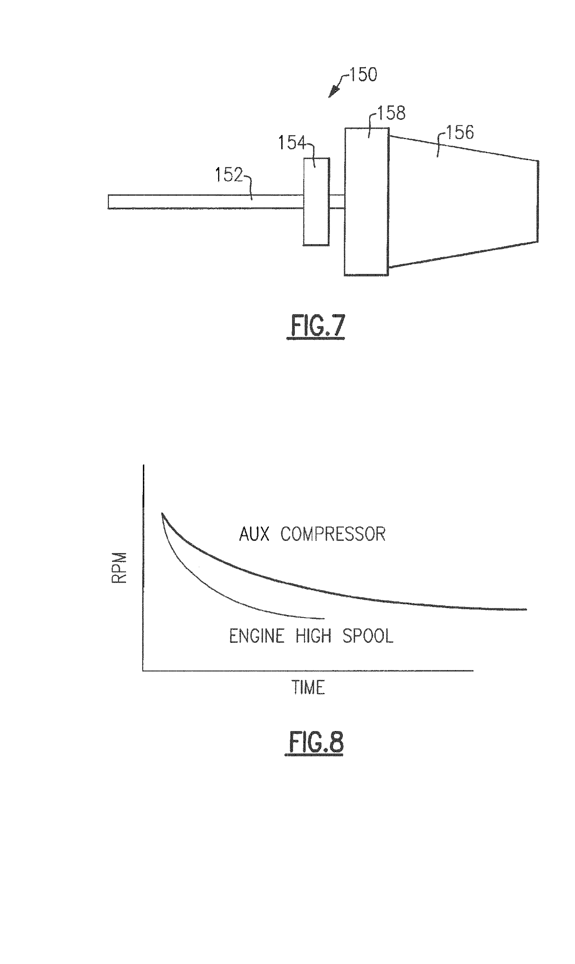

Figure 7 shows an embodiment that addresses a challenge with the above-referenced embodiment. Since the cooling or auxiliary compressor 114 is driven at a speed proportional to the speed of at least one turbine section, it will rotate at a speed proportional to the associated compressor section also.

At times, the overall gas turbine engine may have a very immediate deceleration in speed. If the auxiliary compressor 114 also dramatically reduces speed, there can be stability issues, and the auxiliary compressor could experience a phenomenon called surge. This would be undesirable.

In Figure 7, an embodiment 150 includes an input shaft 152, which could be the shaft - 130 as shown in Figure 6. Shaft 152 drives a one-way clutch, such as ratchet clutch 154. The compressor 156 rotates with a flywheel 158.

Now, consider a point of operation where the system 150 has been driven at a first speed for a period of time. The compressor rotor 156 will be rotating at the speed, and the flywheel 158 will also be rotating at the speed.

Flywheels are known, and typically include a mass that will continue to rotate the rotor even if the input shaft slows. Essentially, a flywheel serves as a means of storing rotational energy.

Should the input 152 now suddenly decelerate, the one-way ratchet 154 will allow the compressor rotor 156 and flywheel 158 to rotate independently of the input 152. Essentially, the ratchet will slip relative to the input 152, and the rotor 156 and flywheel 158 can rotate at a higher speed than the input 152 for a period of time. This will allow the auxiliary compressor to avoid a surge condition, and more gradually approach the speed of the remainder of the engine.

This is illustrated in Figure 8. An engine high spool is shown with a sudden deceleration in speed. However, the auxiliary compressor will have its speed deteriorate on a much slower slope.

While a one-way ratchet and flywheel are shown, more generally, it could be said that the auxiliary compressor is driven at a speed proportional to a turbine speed, and there is a method of allowing the auxiliary compressor to move away from a speed proportional to the speed of the turbine under certain conditions. In embodiments, that would be the one-way ratchet 154 and flywheel 158, however, other ways of achieving such a disconnect could come within the scope of this invention.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A gas turbine engine comprising;
a main compressor section (24) having a high pressure compressor with a downstream discharge, and more upstream locations;
a turbine section (28) having a high pressure turbine (117);
a tap (110) configured to air from at least one of said more upstream locations in said compressor section, passing said tapped air through a heat exchanger (112) and then to a cooling compressor (114), said cooling compressor (114) compressing air downstream of said heat exchanger (112), and delivering air into said high pressure turbine (117); and
said cooling compressor (114) rotating at a speed proportional to a speed of at least one rotor in said turbine section, and said cooling compressor (114) being allowed to rotate at a speed that is not proportional to a speed of said at least one rotor under certain conditions.

2. The gas turbine engine as set forth in claim 1, wherein an input shaft to said cooling compressor (114) is driven at a speed proportional to said at least one turbine rotor, and there being a clutch (154) to disconnect said input shaft from a rotor of said cooling compressor (114) should said input shaft experience a decrease in speed.

3. The gas turbine engine as set forth in claim 2, wherein a one-way ratchet is positioned between said input shaft and said rotor.

4. The gas turbine engine as set forth in any of claims 2-3, wherein a flywheel (158) rotates with said rotor, such that said cooling compressor (114) maintains a rotational speed after said clutch (154) opens and allows said rotor to rotate independently of said input shaft.

5. The gas turbine engine as set forth in any of claims 2-4, wherein a main fan (104) delivers bypass air into a bypass duct (105) and into said heat exchanger (112) positioned within said bypass duct (105) to be cooled by bypass air, and preferably wherein said cooling compressor (114) includes a centrifugal compressor impeller.

6. The gas turbine engine as set forth in claim 5, wherein air temperatures at said downstream most location of said high pressure compressor are greater than or equal to 1350°F, and preferably wherein said turbine section driving a bull gear (125), said bull gear (125) further driving an impeller (129) of said cooling compressor (114).

7. The gas turbine engine as set forth in claim 6, wherein said bull gear (125) also driving an accessory gearbox (121), and/or wherein a gear ratio multiplier is included such that said impeller (129) rotates at a faster speed than said tower shaft.

8. The gas turbine engine as set forth in any of claims 2-7, wherein said impeller (129) is a centrifugal compressor impeller.

9. The gas turbine engine as set forth in any preceding claim, wherein said impeller (129) is a centrifugal compressor impeller.

10. The gas turbine engine as set forth in any preceding claim, wherein an auxiliary fan (116) is positioned upstream of the heat exchanger (112), and preferably wherein said auxiliary fan (116) operates at a variable speed.

11. An intercooling system for a gas turbine engine comprising:
a heat exchanger (112) for cooling air drawn from a portion of a main compressor section at a first temperature and pressure for cooling the air to a second temperature cooler than the first temperature;
a cooling compressor (114) compressing air communicated from the heat exchanger to a second pressure greater than the first pressure and communicating the compressed air to a portion of a turbine section; and
said cooling compressor (114) rotating at a speed proportional to a speed of at least one rotor in said turbine section, and said cooling compressor being allowed to rotate at a speed that is not proportional to a speed of said at least one rotor under certain conditions.

12. The intercooling system as set forth in claim 11, wherein an input shaft to said cooling compressor is driven at a speed proportional to said at least one turbine rotor, and there being a clutch to disconnect said input shaft from a rotor of said cooling compressor should said input shaft experience a decrease in speed.

13. The intercooling system as set forth in claim 12, wherein a one-way ratchet (154) is positioned between said input shaft and said rotor, and/or wherein a flywheel (158) rotates with said rotor, such that said compressor maintains a rotational speed after said clutch opens and allows said rotor to rotate independently of said input shaft.

14. The intercooling system as set forth in any of claims 11-13, wherein a bull gear (125) drives an impeller of said cooling compressor.

15. A gas turbine engine comprising;
a main compressor section (24) having a high pressure compressor with a downstream discharge, and more upstream locations, a low pressure compressor providing some of said more upstream locations;
a turbine section (28) having a high pressure turbine (117); and
a tap (110) tapping air from at least one of said more upstream locations in said compressor section, passing said tapped air through a heat exchanger and then to a cooling compressor, said cooling compressor compressing air downstream of said heat exchanger, and delivering air into said high pressure turbine.
